# FASCICULE DE BREVET EUROPEEN

(11) **EP 1 737 191 B1**
(45) Date de publication et mention de la délivrance du brevet: **26.01.2011**
(21) Numéro de dépôt: 06290955.1
(22) Date de dépôt: 08.06.2006
(51) Int. Cl.: H04L 29/06

(54) **Procédé de création d'un terminal éclaté entre un terminal de base et des équipements connectés en serie**
Verfahren zur Erstellung eines User Equipment Splits zwischen einem Endgerät und seriell verbundenen Geräten
Method for creating a user equipment split between a terminal equipment and serially connected equipments

(30) Priorité: 22.06.2005 FR 0506356
(43) Date de publication de la demande: 27.12.2006
(73) Titulaire: Orange France, 94745 Arcueil Cedex (FR)
(72) Inventeur: Annic, Etienne, 78120 Rambouillet (FR)

(56) Documents cités:
- EP-A- 1 124 351
- 3GPP: "ARIB TR-T12-22.944 V5.1.0 Report on Service Requirements for UE Functionality Split" REPORT ON SERVICE REQUIREMENTS FOR UE FUNCIONALITY SPLIT, juin 2002 (2002-06), pages 1-22, XP002285202

## Description

La présente invention concerne un procédé de création d'un terminal éclaté pour l'accès à un service, ledit terminal éclaté étant constitué d'un terminal de base et d'une pluralité d'équipements connectés en série audit terminal de base.

L'invention trouve une application particulièrement avantageuse dans le domaine des services dits de proximité dont l'accès et l'exécution nécessitent la création d'un "terminal éclaté" selon la procédure décrite dans les recommandations de l'organisme standard du 3GPP (Third Generation Partnership Project). L'invention s'applique particulièrement à l'établissement d'une communication sécurisée pour l'échange de données entre un terminal T de base et plusieurs équipements communicants Eₙ.

L'invention s'applique plus spécialement aux réseaux mobiles GPRS/UMTS, bien qu'elle ne soit pas limitée à cette seule application et puisse être généralisée à tout autre type d'équipements, tels que téléphones fixes, appareils de télévision (TV), ordinateurs personnels, équipements domestiques, équipements industriels, distributeurs automatiques, etc...

La demande de brevet européen EP-A-1549011 décrit comment un terminal dit "éclaté" peut être constitué entre un terminal de base et un équipement communiquant pour la mise en oeuvre d'un service de proximité donné. La procédure, permettant de créer un tel terminal éclaté, est appelée "procédure UES" (User Equipment Split). Ledit terminal éclaté T+E est alors composé d'un terminal T et d'un équipement E. Ce document prévoit qu'un terminal de base donné puisse être connecté indépendamment à plusieurs équipements différents pour constituer autant de terminaux dits "éclatés" associés à autant de services de proximité. Dans ce cas, chacun des équipements différents constitue un terminal éclaté différent, incluant à chaque fois le terminal de base avec chacun des équipements.

Par contre, ce document ne décrit pas comment un terminal de base peut être relié à plusieurs équipements pour réaliser un unique terminal éclaté nécessaire à l'exécution d'un seul service.

Pour remédier à cet inconvénient, l'invention propose un procédé de création d'un terminal éclaté pour l'accès à un service, ledit terminal éclaté étant constitué d'un terminal de base et d'une pluralité d'équipements connectés en série audit terminal de base, le terminal de base et lesdits équipements disposant respectivement de dispositifs de gestion pour l'exécution d'une procédure de terminal éclaté, remarquable en ce que ledit procédé comprend :
- une étape d'initialisation consistant à transmettre au terminal de base, par ledit service, des paramètres d'accès auxdits équipements,
- une pluralité d'étapes itératives successives de création d'un terminal éclaté (T+ΣEₙ₋₁)+Eₙ par raccordement de l'équipement Eₙ au terminal éclaté T+ΣEₙ₋₁ créé à l'étape précédente, chaque étape comprenant les opérations consistant à:
   - transmettre par le terminal de base à l'équipement Eₙ₋₁ les paramètres d'accès à l'équipement Eₙ,
   - établir une communication entre les dispositifs de gestion PAₙ₋₁ et PAₙ pour l'exécution de la procédure de terminal éclaté des équipements Eₙ₋₁ et Eₙ,
   - créer le terminal éclaté (T+ΣEₙ₋₁)⁺ Eₙ par exécution de la procédure UES de terminal éclaté entre les dispositifs de gestion PA₀ et PAₙ via le dispositif de gestion PAₙ₋₁.
De même, l'invention propose un système pour la création d'un terminal éclaté T+ΣEₙ pour l'accès à un service, ledit système comprenant :
- un terminal T de base (20), équipé d'un dispositif (22) de gestion PA₀ pour l'exécution d'une procédure UES de terminal éclaté, ledit dispositif (22) de gestion PA₀ est apte à :
   - exécuter une pluralité d'étapes successives de création d'un terminal éclaté (T+ ΣEₙ₋₁)+Eₙ, par raccordement de l'équipement Eₙ au terminal éclaté T+ΣEₙ₋₁ créé à l'étape précédente , et
   - à transmettre à l'équipement Eₙ₋₁ les paramètres d'accès à l'équipement Eₙ lors de l'étape de création du terminal éclaté (T+ ΣEₙ₋₁)+Eₙ,
   - une pluralité d'équipements Eₙ connectés en série audit terminal T de base, lesdits équipements (30, 40) étant respectivement chacun équipé d'au moins un dispositif de gestion PAₙ pour l'exécution de ladite procédure UES de terminal éclaté, ledit dispositif de gestion PAₙ étant apte établir une communication entre les dispositifs de gestion PAₙ₋₁ et PAₙ pour l'exécution de la procédure de terminal éclaté des équipements Eₙ₋₁ et Eₙ.

L'invention propose encore un équipement E communicant (30, 40) pour la mise en oeuvre du procédé de création de terminal éclaté et apte être mis en oeuvre dans un système pour la création d'un terminal éclaté, comprenant:
- au moins un deuxième dispositif (32, 42) de sécurité pour réaliser l'identification, l'authentification et le contrôle d'intégrité dudit équipement communicant (30, 40),
- un dispositif de gestion PAₙ pour l'exécution de ladite procédure UES de terminal éclaté, ledit dispositif de gestion PAₙ étant apte établir une communication entre les dispositifs de gestion PAₙ₋₁ et PAₙ pour l'exécution de la procédure de terminal éclaté des équipements Eₙ₋₁ et Eₙ, et
- au moins des moyens d'émission et de réception de données, lesdits moyens étant aptes à établir une communication entre les dispositifs de gestion PAₙ₋₁ et PAₙ pour l'exécution de la procédure de terminal éclaté des équipements Eₙ₋₁ et Eₙ.

L'invention propose aussi un systeme selon la revendication 5 et un terminal selon la revendication 6.

L'invention définit la procédure pour constituer un terminal éclaté composé d'un terminal de base T et de plusieurs équipements communicants E₁ à Eₙ. Ledit terminal éclaté T+E₁+E₂+...+Eₙ permet à l'utilisateur du terminal de base d'augmenter les possibilités et les caractéristiques techniques de son terminal de base. L'utilisateur d'un terminal peut souhaiter communiquer avec un équipement qui ne lui appartient pas ou qui n'est pas physiquement connecté au terminal de base. En particulier, le terminal peut être situé à proximité ou non de différents équipements avec lesquels l'utilisateur souhaite communiquer. Le système permet la construction d'un terminal éclaté, qui se construit progressivement avec des communications sécurisées, équipement après équipement, entre un terminal de base T et plusieurs équipements communicants.

Selon un mode de réalisation de l'invention, lesdits paramètres d'accès à l'équipement En comprennent un identifiant de l'équipement Eₙ₋₁ d'une interface d'accès audit équipement Eₙ par un réseau de proximité PNₙ reliant les équipements Eₙ₋₁ et Eₙ.

En l'absence d'une spécification d'un tel identifiant d'interface parmi les paramètres d'accès fournis par le dispositif de gestion PA₀ sur le terminal de base T, l'invention prévoit que lesdits paramètres d'accès à l'équipement En comprennent une adresse de l'équipement En dans le réseau de proximité PNₙ et un identifiant de l'équipement Eₙ, et que l'interface sur l'équipement Eₙ₋₁ d'accès audit équipement Eₙ dans un réseau de proximité PNₙ reliant les équipements Eₙ₋₁ et En est déterminée en exécutant la procédure UES de terminal éclaté par le dispositif de gestion PAₙ₋₁ successivement sur toutes les interfaces de l'équipement Eₙ₋₁ dans ledit réseau de proximité, jusqu'à ce que la procédure de terminal éclaté appliquée à une desdites interfaces envoie ledit identifiant de l'équipement Eₙ.

Lorsque le chemin d'accès n'est pas renseigné, le dispositif PAₙ lance une procédure UES sur chaque interface de l'équipement E_{n,} une à une, jusqu'à trouver celle qui, par la procédure UES, envoie l'identifiant de l'interface d'accès identique à celui fourni par le service S.

Enfin, selon une disposition avantageuse du procédé conforme à l'invention, à l'issue de la création du terminal éclaté (T+ΣEₙ₋₁)+Eₙ, le dispositif de gestion PAₙ₋₁ établit un tunnel T(n-1)-n de communication permanente avec le dispositif de gestion PAₙ, et le dispositif de gestion PA₀ établit un tunnel T0-n de communication permanente avec le dispositif de gestion PAₙ, encapsulé dans les tunnels T0-(n-1) et T(n-1)-n.

La composition du terminal éclaté est lié à l'établissement d'une liaison entre le terminal de base T et les équipements communicants Eₙ. Les équipements communicants En , indépendants physiquement du terminal de base, sont en liaison avec le terminal de base T par l'intermédiaire de réseaux de proximité PNₙ. Les tunnels de communication sont établit entre le terminal de base T et les différents équipements communicants En , jusqu'au dernier équipement terminant ledit terminal éclaté, de manière à permettre une communication permanente et sécurisée au sein du terminal éclaté constitué avec les différents équipements.

La description qui va suivre en regard des dessins annexés, donnés à titre d'exemples non limitatifs, fera bien comprendre en quoi consiste l'invention et comment elle peut être réalisée.

La figure 1 représente l'architecture d'un système montrant un terminal éclaté constitué d'un terminal de base et deux équipements connectés en série.

La figure 2 est un schéma montrant un mode de réalisation particulier d'un terminal éclaté conforme à l'invention.

La figure 3 est un schéma illustrant la procédure de terminal éclaté entre un terminal de base et un équipement.

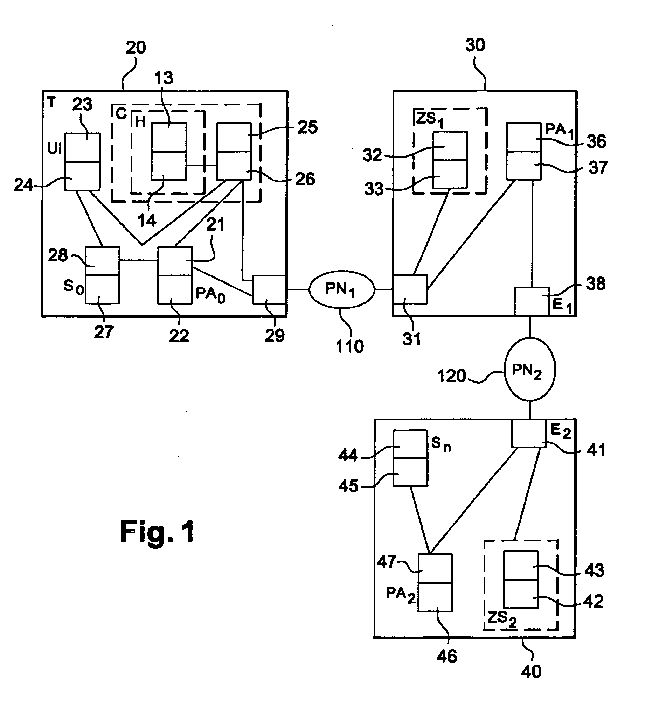

Un système et un procédé pour la création d'un terminal éclaté entre un terminal T de base et deux équipement E₁ et E₂ , connectés en série au terminal T de base, va maintenant être décrit en regard de la figure 1.

On se place dans la situation où un service S de proximité exige la création d'un terminal éclaté représenté symboliquement par l'écriture T+E₁+E₂. Les dispositifs de gestion PAₙ pour l'exécution de la procédure de terminal éclaté sont représentés avec n=0,1,2, l'indice 0 valant pour le terminal T de base.

### Création du terminal éclaté

Le système, conforme à l'invention et correspondant à un terminal éclaté, est constitué sur la figure 1 d'un terminal de base et deux équipements connectés en série. D'une manière générale, le service de proximité S nécessite la création d'un terminal éclaté T+ZEₙ (où En désigne les équipements à raccorder en série au terminal T). Sur la figure 1, le nombre est limité à 2 à titre d'exemple.

La composition du terminal éclaté est liée à l'établissement d'une liaison entre le terminal de base 20 et les équipements En communicants 30, 40. Lesdits équipements communicants 30, 40 sont en liaison avec le terminal T par l'intermédiaire de réseaux 50, 60 de proximité. L'invention permet l'établissement d'une communication sécurisée pour l'échange de données entre un terminal T de base et plusieurs équipements communicants Eₙ.

Lesdits réseaux 50, 60 de proximité permettent des communications appartenant au groupe constitué des communications filaire, radio, optique et radiocommunication de proximité, tel qu'une liaison série par câble, un réseau GPRS de télécommunications mobiles, un réseau Wifi (Wireless Fidelity), une liaison infrarouge IrDA (Infrared Data Association), une liaison de communication de proximité sans contact ou NFC (Near Field Contactless) ou bien une liaison sans fil radio Bluetooth (liaison radio courte distance), etc...

Le terminal T de base 20 est de toute nature, par exemple un ordinateur personnel ou PC, un terminal mobile ou bien tout autre terminal permettant l'ajout des équipements En communicants 30, 40. Les équipements En communicants 30, 40 peuvent être de différente nature, par exemple une borne publique de communication avec un service de messagerie, un distributeur communicant de boissons avec une application de paiement électronique, une borne communicante de péage de parking, un parcmètre communicant, un ordinateur personnel de type PC, etc... Par conséquent, les équipements En , avec lesquels l'utilisateur du terminal souhaite communiquer, peuvent ne pas lui appartenir et donc l'utilisateur ne peut librement en disposer.
La composition du terminal éclaté est réalisée quelque soit la nature desdits équipements communicants, sans avoir à réaliser une configuration pour rendre compatible le terminal et lesdits équipements, ce qui évite une perte de temps et des erreurs de configuration dudit terminal par l'utilisateur. La compatibilité et la sécurisation de la communication établie entre le terminal et les équipements communicants sont réalisées de façon automatique, en étant adaptée à tout équipement communicant proche ou distant.

Le système, conforme à l'invention, permet la création d'un terminal éclaté T+ΣEₙ pour l'accès à un service S, ledit système comprenant un terminal T de base, équipé d'un dispositif de gestion PA₀ pour l'exécution d'une procédure UES de terminal éclaté, et une pluralité d'équipements En connectés en série audit terminal T de base, lesdits équipements En étant respectivement chacun équipé d'au moins un dispositif de gestion PAₙ pour l'exécution de ladite procédure UES de terminal éclaté.

Sur le terminal T de base 20, UI représente l'interface utilisateur 23 qui peut être un écran de visualisation ou tout autre moyen permettant l'accès de ou vers l'utilisateur, tel qu'une commande vocale par exemple.

L'interface 23 utilisateur (UI) commande au moins un dispositif 27 du service de proximité S₀ sur le terminal 20 par l'intermédiaire des premières et secondes interfaces de communication 24 et 28 correspondantes.

Ledit dispositif 27 du service de proximité S₀ sur le terminal 20 a en charge la réalisation du service de proximité S. Il permet la création du terminal éclaté et gère les échanges avec au moins un dispositif 44 du service de proximité S₂ sur un équipement E₂ communicant 40 qui termine ledit terminal éclaté.

Pour créer le terminal éclaté, le dispositif 27 du service S₀ transmet un message de demande de "création terminal éclaté", par l'intermédiaire d'une troisième interface 28 de communication et d'une quatrième interface 21 de communication, vers le dispositif 22 de gestion PA₀ du terminal éclaté multi-équipements. Ledit message de demande contient les paramètres des équipements communicants constitutifs dudit terminal éclaté à réaliser, ainsi que l'ordre de succession pour le raccordement de la série des équipements constituant le terminal éclaté. A titre d'exemple, ledit dispositif 27 du service S₀ pour l'accès au service de proximité S peut être représenté sous la forme d'un hyperlien sur l'interface 23 utilisateur UI (telle qu'un écran par exemple), qui commande la demande transmise.

Le terminal de base 20 comprend donc au moins ledit premier dispositif 25 de sécurité recevant l'identité d'au moins un équipement E communicant 30, 40, au moins une interface utilisateur 23 accédant aux ressources dudit terminal 20, ledit dispositif 22 de gestion PA₀ pour gérer ledit terminal éclaté. Il comprend également des moyens d'émission et de réception de données, tels que des interfaces de communication 13, 21, 24, 26, 28 pour la communication de données du terminal 20 et au moins une interface d'accès 29 pour accéder à au moins un équipement E communicant 30, 40, par l'intermédiaire d'au moins un réseau de proximité PN.

Ledit dispositif 22 de gestion PA₀ du terminal éclaté multi-équipements a en charge la réalisation du terminal éclaté en fonction du contenu de la demande en provenance du dispositif 27 du service S₀ et de son maintien jusqu'à la fin de l'exécution du service de proximité S.

Ledit dispositif 22 de gestion PA₀ commande la création du terminal éclaté multi-équipements par itérations successives de la procédure UES pour les équipements mentionnés dans ladite demande et dans l'ordre exact précisé par cette demande. Ladite procédure UES (User Equipment Split) est identique à celle décrite dans la demande de brevet européen EP-A-1549011, mais elle est modifiée pour permettre une itération successive de création du terminal éclaté multi-équipements.

Le dispositif 22 de gestion PA₀ du terminal éclaté multi-équipements exécute les itérations pour le raccordement de chaque équipement au terminal éclaté. Cette étape est itérative et indique à chaque fois le numéro de l'équipement à raccorder. Chaque itération est spécifique à l'équipement à raccorder avec des paramètres et des dispositifs différents, données contenues dans ledit message de demande de "création terminal éclaté". Le dispositif 22 de gestion PA₀ réitère la procédure autant de fois qu'il y a d'équipements Eₙ à raccorder au terminal éclaté conformément à la demande du service de proximité. A l'issue, un terminal éclaté T+ ΣEₙ est créé, où ΣEₙ équivaut à E₁ + E₂ + ... + En.

Pour ce faire, le dispositif 22 de gestion PA₀ transmet un message de "déclenchement" vers un dispositif 25 de sécurité du terminal 20, par l'intermédiaire des interfaces de communication 21 et 26, pour raccorder E₁ le premier équipement 30. Le dispositif 22 de gestion PA₀ est le seul à connaître l'équipement à raccorder et transmet les messages entre ledit équipement E₁ et le dispositif 25 de sécurité du terminal 20.

Le dispositif 25 de sécurité du terminal 20 demande l'identification du premier équipement E₁ communicant 30. Ledit dispositif 25 de sécurité envoie un message d'interrogation d'identification vers au moins un dispositif 32 de sécurité dudit premier équipement E₁ communicant 30 via une interface 33 de communication, par l'intermédiaire du dispositif 22 de gestion PA₀ via les interfaces de communication 26 et 21, et des interfaces d'accès 29 et 31 de part et d'autre du réseau 110 de proximité PN₁. Ledit message contient la référence de la procédure en cours d'activation du terminal éclaté et le type de message "demande identification".

Un équipement E communicant 30, 40 comprend donc au moins un deuxième dispositif 32, 42 de sécurité pour réaliser son identification, son authentification et un contrôle d'intégrité dudit équipement E, ledit dispositif 36, 46 de gestion PAₙ pour gérer ledit terminal éclaté. Il comprend également des moyens d'émission et de réception de données, tels que des interfaces de communication 33, 37, 43, 45, 47 pour la communication de données dudit équipement 30, 40 et au moins une interface d'accès 31, 38, 41 pour les échange dudit terminal éclaté, par l'intermédiaire d'au moins un réseau de proximité PN.

A l'issue de la procédure UES conduisant à la construction du terminal T+E₁, le dispositif 22 de gestion PA₀ transmet un message de "création tunnel" pour la création d'un tunnel T0-1 de communication permanente vers le dispositif 36 de gestion de l'équipement E₁. Le tunnel est créé entre les dispositifs 22, 36 de gestion PA₀ et PA₁ du terminal éclaté.

La procédure se répète pour les différents équipements à raccorder en passant par le dispositif 22 de gestion PA₀ du terminal 20.

Le dispositif 22 de gestion PA₀ du terminal 20 transmet un message "échange paramètres" vers le dispositif 36 de gestion PA₁ de l'équipement E₁ contenant les paramètres nécessaires pour accéder au deuxième équipement E₂ communicant 40. Ces paramètres comprennent, en outre : - l'identifiant d'une deuxième interface 38 d'accès du premier équipement E₁ communicant 30 pour accéder au deuxième équipement E₂ communicant 40 ; - une adresse dudit deuxième équipement E₂ communicant 40 pour le réseau de proximité PN₂ entre le premier et le deuxième équipements E₁, E₂ ; - un identifiant du dispositif 46 de gestion PA₂ de l'équipement E₂.

De la même façon, ledit message "échange paramètres" est itératif pour chacun des équipements constituant le terminal éclaté.

A l'issue de la construction du terminal T+E₁, le dispositif 22 de gestion PA₀ commence une nouvelle procédure UES avec le deuxième équipement E₂ communicant 40, de façon identique à celle du premier équipement E₁.

Le dispositif 22 de gestion PA₀ transmet un message de "déclenchement" vers le dispositif 25 de sécurité du terminal 20, par l'intermédiaire des interfaces de communication 21 et 26. Ledit dispositif 25 de sécurité du terminal 20 demande l'identification du deuxième équipement E₂ communicant 40.

Ledit dispositif 25 de sécurité émet un message d'interrogation d'identification vers un dispositif 42 de sécurité du deuxième équipement E₂ communicant 40, via les interfaces 26 et 21, via le dispositif 22 de gestion PA₀, via le tunnel T0-1 de communication, via le dispositif 36 de gestion PA₁ de l'équipement E₁ et une interface 37 de communication, via l'interface 38 d'accès dudit premier équipement E₁, via le réseau 120 de proximité PN₂, via une interface 41 d'accès et une interface 43 de communication du deuxième équipement E₂ communicant 40. Ledit message contient la référence de la procédure en cours d'activation du terminal éclaté et le type de message "demande identification".

Pour la construction du terminal T+E₁+E₂, le dispositif 36 de gestion PA₁ transmet un message de "création tunnel" pour la création d'un tunnel T1-2 de communication permanente vers le dispositif 46 de gestion PA₂ de l'équipement E₂ dont l'identifiant est contenu dans les paramètres transmis. De plus, le dispositif 22 de gestion PA₀ transmet un message de "création tunnel" pour la création d'un tunnel T0-2 de communication permanente vers le dispositif 46 de gestion PA₂ de l'équipement E₂. Ledit message est encapsulé dans le tunnel T0-1 vers le dispositif 36 de gestion PA₁ qui le transmet dans le tunnel T1-2. Le tunnel est créé entre les dispositifs 22, 46 de gestion PA₀ et PA₂ du terminal éclaté multi-équipements.

Dans le cas de plus de deux équipements, le dispositif 22 de gestion PA₀ du terminal 20 transmet un message "échange paramètres" vers le dispositif 46 de gestion PA₂ de l'équipement communicant E₂, via une interface 47 de communication, contenant les paramètres nécessaires pour accéder à un troisième équipement communicant, et ainsi de suite avec les équipement suivants. Le dispositif 22 de gestion PA₀ du terminal 20 réitère la procédure autant de fois qu'il y a d'équipements En à raccorder pour le terminal éclaté conforme à la demande du service de proximité S. A l'issue, un terminal éclaté T+ΣEₙ est créé.

Quand le terminal éclaté multi-équipements T+ΣEₙ est créé, le dispositif 22 de gestion PA₀ du terminal 20 est prêt à transmettre les communications émises par le dispositif 27 du service S₀ vers l'équipement terminatif En dudit terminal éclaté. Dans l'équipement En, un dispositif du service Sₙ est prévu pour communiquer avec le dispositif 27 du service S₀ du terminal 20, afin de réaliser le service de proximité S. Le dispositif 27 du service S₀ connaît l'adresse du dispositif 44 du service Sₙ transmis dans les paramètres de l'équipement Eₙ communicant. Les communications entre les dispositifs 27 et 44 du service S₀ et Sₙ transitent dans le tunnel T0-n raccordant les dispositifs 22 et 46 de gestion PA₀ et PAₙ. Lesdites communications à partir du dispositif 27 du service S₀ passe par le dispositif 22 de gestion PA₀ pour accéder au dispositif 44 du service Sₙ, et celle à partir du dispositif 44 du service Sₙ passe par le dispositif 46 de gestion PAₙ pour accéder au dispositif 27 du service S₀. Dès lors, le service de proximité S peut s'exécuter.

Quand le service de proximité se termine, le dispositif 27 du service S₀ du terminal 20 émet un message "fin du service" vers le dispositif 22 de gestion PA₀.

Le dispositif 22 de gestion PA₀ du terminal 20 émet un message "fin terminal éclaté" vers le dispositif 36 de gestion PA₁ de l'équipement E₁ via le tunnel T0-1, qui le transmet vers le dispositif 46 de gestion PA₂ via le tunnel T1-2 et ainsi de suite jusqu'au dispositif de gestion PAₙ. Les dispositifs de gestion PAₙ ferment les tunnels associés au terminal éclaté multi-équipements et effacent les données associées audit terminal éclaté correspondant à la référence de la procédure.

De la même manière, le dispositif 22 de gestion PA₀ du terminal 20 peut décider de clore le terminal éclaté multi-équipements à l'issue d'une période d'absence de communications entre les dispositifs du service S₀ et Sn. Le dispositif 22. de gestion PA₀ du terminal 20 transmet alors ledit message au dispositif 36 de gestion PA₁ de l'équipement E₁ et ainsi de suite.

A l'issue de la clôture, il ne reste plus aucune trace dudit terminal éclaté multi-équipements sur les équipements En l'ayant constitué.

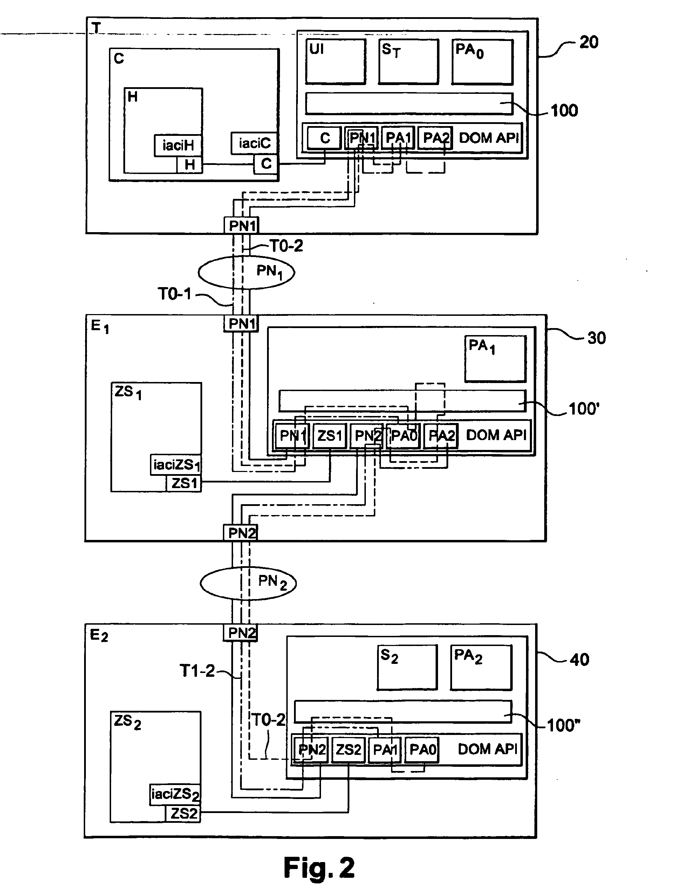

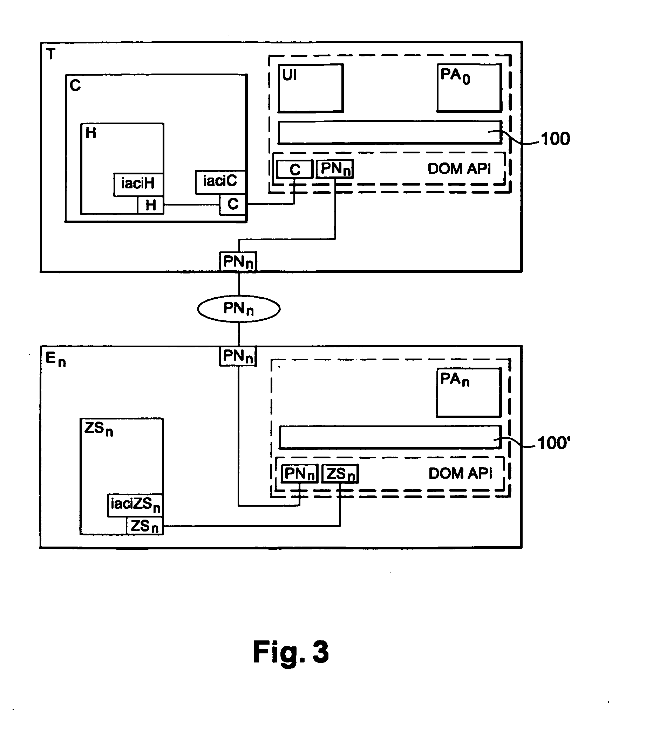

Selon un mode de réalisation particulier, représenté sur la figure 2, les dispositifs de gestion PAₙ pour l'exécution de la procédure de terminal éclaté peuvent être réalisés en contenu Web interactif appelé aussi "application Web". Les applications Web fonctionnent à l'aide d'un type de navigateur Web (référencé par 100, 100', 100" sur les figures 2 et 3), appelé "browser NG" (nouvelle génération). Ce type de browser possède des fonctions client et serveur, et définit des interfaces applicatives universelles appelées DOM API, interfaces applicatives (API) écrites en langage W3C DOM (Document Object Model). Chaque DOM API définit une interface d'accès vers une interface physique ou logicielle. Par exemple, si le terminal T possède une interface réseau infrarouge (Irda), le browser du terminal T possèdera une DOM API « Irda » permettant à une application Web d'accéder à l'interface réseau Irda de façon standard. La DOM API « Irda » masque pour l'application Web les différences d'implémentation d'une interface réseau Irda sur un équipement utilisateur.

Les dispositifs de gestion PAₙ permettent la réalisation de la procédure UES et offrent au service S une interface d'accès aux équipements Eₙ. Vu du service S, les dispositifs de gestion PAₙ jouent le rôle de DOM API d'accès à un équipement quelque soit la technologie sous-jacente.

Pour fonctionner selon ce modèle, le terminal T et les équipements E₁ et E₂ possèdent tous un browser NG et des DOM API permettant l'accès à leurs interfaces respectives.

L'exemple d'utilisation suivant se résume à une navigation Web. Dans ce cas, l'interface utilisateur UI du terminal T de base est représentée par une application Web, qui permet le lancement du service S. L'utilisateur accède à ladite interface utilisateur UI sur son terminal T, navigue, sélectionne et active un lien d'accès au service S, par exemple, l'élément de navigation « object » du langage XHTML-Basic. Le dispositif du service S est une application Web (S₀ sur le terminal T) qui exécute la procédure du service.

Le service S est constitué de l'application Web ST sur le terminal T contenant les paramètres d'accès et les procédures pour la réalisation dudit service. n valant ici 0,1 ou 2, les paramètres sont [(id(T),,, PA₀), (id(E₁), @(E₁), CA(E₁), PA₁), (id(E₂), @(E₂), CA(E₂), PA₂)], où PA₀, PA₁, PA₂ sont renseignés au format Web URI (Universal Resource Identifier).

Pour chaque équipement En, sont indiqués les paramètres d'accès (id(Eₙ), @(Eₙ), CA(Eₙ), PAₙ) correspondant :
- id(Eₙ) est un identifiant de l'équipement En,
- @(Eₙ) est une adresse identifiant l'équipement En dans le réseau de proximité PNₙ raccordant les équipements Eₙ₋₁ et Eₙ. Dans le cas de réseaux ne disposant pas d'adresse, comme le réseau infrarouge, cette adresse n'est pas renseignée,
- CA(Eₙ) est le chemin d'accès à l'équipement En, précisant l'interface du réseau de proximité de l'équipement Eₙ₋₁ donnant accès à l'équipement Eₙ.

Les paramètres incluent l'accès à l'application PA₀. L'application ST exécute le dispositif de gestion PA₀ en transmettant comme paramètres d'exécution les paramètres d'accès aux équipements Eₙ. Le transfert de paramètres de ST vers PA₀ est réalisé, par exemple, à l'aide d'une interface applicative utilisant le protocole SOAP (Simple Object Access Protocol) ou tout autre langage web de description d'échange d'informations entre des interfaces applicatives. Le dispositif de gestion PA₀ est une application Web prévue pour réaliser le terminal éclaté T+E1+E2 suivant les instructions figurant dans les paramètres d'accès associé au service S.

### Etape 1

Le dispositif de gestion PA₀ lance la procédure UES pour créer le terminal éclaté T+E₁, par raccordement de l'équipement E₁ au terminal T. La DOM API d'accès à E₁ est la DOM API « Irda » (PN₁= réseau Irda sur la figure 2). Des paramètres d'accès à E₁, PA₀ déduit la DOM API d'accès au réseau PN₁ (DOM API « Irda »), génère une communication vers E₁ (un lien infrarouge ne nécessite pas d'adresse). PA₁ est une application Web sur E₁. Elle est à l'écoute de l'interface d'accès au réseau PN₁. L'ouverture d'une communication de PA₀ vers E₁ active l'interface d'accès au réseau PN₁ de E₁, génère l'événement de réception de données sur la DOM API « Irda » de E₁, ce qui active PA₁. Le dispositif de gestion PA₁ intercepte toutes communications provenant de l'interface d'accès au réseau PN₁, les analysent avant de les retransmettre vers l'application destinataire. PA₁ sert de relais de PA₀ dans E₁ pour la réalisation de la procédure UES. Les échanges au cours de la procédure UES entre PA₀ et PA₁ sont réalisés, par exemple, par le protocole SOAP. La procédure UES se déroule conformément à la demande de brevet européen EP-A-1549011. A l'issue de cette procédure, le terminal éclaté T+E₁ est créé.

### Etape 2

A l'issue de la création du terminal éclaté T+E₁, PA₀ transmet à PA₁ les paramètres d'accès à E₂. Le dispositif de gestion PA₀ établit un tunnel T0-1 de communication permanente vers PA₁, par exemple, par le protocole HTTP. Cette communication peut-être sécurisée par les clés de chiffrement issues de la précédente procédure UES ; dans ce cas, on parlera de protocole HTTPS (protocole HTTP encapsulé dans un protocole de sécurité comme SSL ou TLS). Une DOM API temporaire « PA₁ » est créée par PA₀ sur le terminal T pointant sur le tunnel T0-1 de manière, en invoquant cette DOM API « PA₁ », à donner l'accès au dispositif de gestion PA₁ via le tunnel T0-1. De la même manière, une DOM API temporaire « PA₀ » est créée par PA₁ sur E₁ pointant sur le tunnel T0-1 de manière, en invoquant cette DOM API « PA₀ », à donner l'accès au dispositif de gestion PA₀ via le tunnel T0-1.

### Etape 3

L'étape 3 est identique à l'étape 1 : PA₀ lance la procédure UES pour créer le terminal éclaté (T+E₁)+E₂ par raccordement de E₂ au terminal éclaté T+E₁. La seule différence par rapport à l'étape 1 est que la DOM API « Irda » (PN₁= réseau Irda) d'accès à E₁ précédente est remplacée par la DOM API d'accès à E₂ qui n'est autre la DOM API « PA₁ ». Les paramètres d'accès à E₂ sont transmis de PA₀ à PA₁ via la DOM API « PA₁ », par exemple, par le protocole SOAP. PA₁ déduit des paramètres la méthode d'accès à E₂ (DOM API « Wifi », PN₂= réseau Wifi sur la figure 2) et génère une communication vers E₂ à l'aide de l'adresse de E₂ dans le réseau PN₂. PA₂ est une application Web sur E₂. Elle est à l'écoute de l'interface d'accès au réseau PN₂. L'ouverture d'une communication de PA₁ vers E₂ active l'interface d'accès au réseau PN₂ sur E₂ et génère l'événement de réception de données sur la DOM API « PN₂ » de E₂ , ce qui active PA₂. Le dispositif de gestion PA₂ intercepte toutes communications provenant de l'interface avec le réseau PN₂, les analysent avant de les retransmettre vers l'application destinataire. PA₂ sert de relais de PA₀ dans E₂ pour la réalisation de la procédure UES. PA₁ se charge de retransmettre dans E₁ les échanges entre PA₀ et PA₂. Les échanges au cours de la procédure UES entre PA₀ et PA₂ sont réalisés par exemple par SOAP. La procédure UES se déroule conformément à la demande de brevet européen n° EP-A-1549011. A l'issue de cette procédure, le terminal éclaté T+E₁+E₂ est créé.

### Etape 4

L'étape 4 est identique à l'étape 2. A l'issue de la création du terminal éclaté T+E₁+E₂, PA₀ ne transmet aucun paramètre à PA₂, E2 étant l'équipement final du terminal éclaté. PA₁ établit un tunnel T1-2 de communication permanente avec PA₂, par exemple, par le protocole HTTP. Une DOM API temporaire « PA₂ » sur E₁ est créée par PA₁ et pointant sur le tunnel T1-2 de manière, en invoquant cette DOM API « PA₂ », à donner l'accès à l'application PA₂. De la même manière, une DOM API temporaire « PA₁ » sur E₂ est créée par PA₂ pointant sur le tunnel T1-2 de manière, en invoquant cette DOM API « PA₁ », à donner l'accès à PA₁. Le dispositif de gestion PA₀ établit un tunnel T0-2 de communication permanente avec PA₂, par exemple, par le protocole HTTP. Cette communication peut-être sécurisée par les clés de chiffrement issues de la précédente procédure UES ; dans ce cas, on parlera de protocole HTTPS (protocole HTTP encapsulé dans un protocole de sécurité comme SSL ou TLS). Une DOM API temporaire « PA₂ » sur T est créée par le dispositif de gestion PA₀ pointant sur le tunnel T0-2 de manière, en invoquant cette DOM API « PA₂ », à donner l'accès à PA₂. De la même manière, une DOM API temporaire « PA₀ » sur E₂ est créée par PA₂ pointant sur le tunnel T0-2 de manière, en invoquant cette DOM API « PA₀ », à donner l'accès à PA₀. On notera que le tunnel T0-2 est encapsulé dans les tunnels T0-1 et T1-2. L'aboutement des tunnels T0-1 et T1-2 est fait par PA₁.

### Etape 5

Le dispositif de gestion PA0 informe l'application ST de la réalisation du terminal éclaté conformément à ses directives.

### Déroulement du service S

Le service S se décompose en une partie sur T (application ST) et une partie sur E2 (application S2), ces 2 applications sont des applications Web communiquant entre elles via les applications Web PA₀ et PA₂ qui sont vues comme des DOM API respectivement pour les applications S2 et ST. L'interface applicative (API) d'accès de ST à S2 est PA₀ et l'interface applicative d'accès S₂ à ST est PA₂. ST en tant qu'application Web est capable de naviguer au sein des applications de E₂, rendues accessibles depuis le browser de cet équipement, offrant la fonction de serveur Web. Comme sur l'Internet, le browser de E₂ offrant une fonction de serveur Web, publie l'application S₂. ST accède à S₂ via le browser de E₂ et la DOM API « PA₀ ». ST accède à S₂ car S₂ est renseignée dans l'application ST sous la forme, par exemple, d'un élément de navigation « object » du langage XHTML-Basic. L'application S₂ peut être une simple page Web. L'application ST télécharge cette page Web et la fait afficher par le browser du terminal T.

A titre d'exemple d'utilisation concrète, le terminal T est le terminal mobile d'un utilisateur, l'équipement E₁ est une passerelle de télévision sous la forme d'un boîtier dans le salon du client et l'équipement E₂ est le serveur de péage de films dans le réseau d'un opérateur. Le terminal T accède à l'équipement E₁ par un réseau Wifi. L'équipement E₁ accède à l'équipement E₂ par un réseau IP.

Suite à la sélection du service S par l'utilisateur, le terminal éclaté terminal mobile + passerelle + serveur de péage est créé. L'application ST accède à la liste publiée par l'application S₂ sous la forme d'une page Web des films pouvant être achetés par le client. Le client fait son choix. Le code de droit d'accès au film sélectionné est transmis de l'application S₂ à l'application ST et stocké sur le terminal T. L'application ST commande la fermeture du terminal éclaté.

Les films sont diffusés au terminal T via la passerelle de télévision, l'application ST exécute l'application de lecture de film sur le terminal T en fournissant comme paramètre le code de droit d'accès pour que ce dernier décode le film diffusé par la passerelle et le restitue au client. Lorsque le service de proximité S est un service de paiement, ledit service exécute les applications ST et Sₙ en suivant un procédé certifié et conforme à la procédure de paiement. Pour garantir la certification, ST et Sₙ peuvent être par exemple inclus dans une carte à puce ou un composant électronique sécurisé.

La procédure UES va maintenant être décrite en détail en référence à la figure 3.

La procédure UES est issue de la demande de brevet européen EP-A-1549011 et adaptée pour gérer l'activation d'un terminal éclaté raccordant plusieurs équipements T+ΣEₙ.

Par rapport la description de ce document, le modèle pris en exemple est un modèle simplifié du terminal éclaté, où le serveur d'authentification et son dispositif d'homologation sont intégrés dans un dispositif de sécurité C.

L'application PA₀ a été préalablement activée par l'activation du service S par l'interface utilisateur UI. L'application PA₀ envoie vers le dispositif de sécurité C via la DOM API « C » un message de type "identification équipement".

Le message "identification équipement" est transmis à l'application iaciC, qui génère une référence permettant d'identifier une demande d'activation parmi un ensemble de demandes d'activation. Il émet un message d'interrogation d'identification, via l'interface C, de la DOM API « C » vers l'application PA₀. L'application PA₀ relaie le message vers l'application iaciZSₙ de la zone de sécurité ZSₙ de l'équipement En et contenant la référence de la procédure en cours et le type de message "demande identification". La DOM API à destination de l'équipement Eₙ est identifiée par les paramètres d'accès à l'équipement En inclus dans l'application PA₀.

Une application PAₙ est une application Web à l'écoute d'activité de l'interface d'accès au réseau PNₙ de l'équipement Eₙ. La réception du message "demande identification", conduit l'application PAₙ à le relayer vers l'application iaciZSₙ via la DOM API « ZSₙ » et l'interface ZSₙ. L'application iaciZSₙ transmet, relayée via les applications PAₙ et PA₀, à l'application iaciC un message de réponse à l'interrogation d'identité contenant la référence de la procédure en cours, le type de message "réponse interrogation d'identité" et l'identité chiffrée IC produit de chiffrement par KA de l'identité IE de l'équipement En et de la référence de la procédure en cours. On notera que la clé KA est utilisée pour chiffrer l'identité lE de l'équipement En dans le but qu'il soit déchiffrable uniquement par le dispositif d'homologation H afin d'éviter une éventuelle manipulation frauduleuse du terminal T. La référence de la procédure en cours est employée dans le but d'ajouter une valeur aléatoire au produit du chiffrement, de manière que le produit IC soit toujours différent et ne soit pas reproductible par simple copie. La clé KA(IE) donne toujours le même résultat, alors que KA(IE, référence procédure) donne des résultats toujours différents, la référence de la procédure variant à chaque activation.

Après avoir reçu le message "réponse interrogation d'identité", l'application iaciC transmet un message à destination de l'application iaciH contenant la référence de la procédure en cours, le type de message "consultation identité", l'identité IC de l'équipement En chiffrée par la clé KD(KD(IC)) et le condensé COCl produit par le chiffrement à partir de la clé KD des précédents composants de ce message. Le condensé a pour utilité la validation du message et l'authentification du dispositif émetteur par le dispositif destinataire. On notera que le condensé est toujours chiffré par une clé de manière que l'équipement destinataire puisse le déchiffrer par la clé complémentaire et aussi authentifier le dispositif émetteur du message. Dans le cas présent, le dispositif émetteur (l'application iaciC de la carte de sécurité C) chiffre le condensé avec la clé KD et le dispositif récepteur (l'application iaciH du dispositif d'homologation H) déchiffre le condensé par la clé complémentaire KD'. L'application iaciC de la carte de sécurité C chiffre le produit IC par sa clé KD afin que le dispositif iaciH soit assuré que l'application iaciC ait validé le démarrage de la procédure d'activation en déchiffrant le produit KD(IC).

Après avoir reçu le message "consultation identité", l'application iaciH déchiffre le condensé COCl et le produit KD(IC) par sa clé KD' et en déduit la validité du message et le produit IC. Connaissant la référence de la procédure en cours et possédant la clé KA', il déchiffre le produit IC et en déduit l'identifiant IE de l'équipement Eₙ. Par l'intermédiaire d'une table de correspondance contenant les identités IE, les clés KC et les intitulés des équipements En - les intitulés sont des noms communs des équipements Eₙ, par exemple "borne de péage" - et connaissant l'identité IE de l'équipement En, l'application iaciH déduit la clé KC de l'équipement Eₙ et en déduit l'intitulé de l'équipement En. Si le déchiffrement se déroule correctement et que l'identité IE de l'équipement En ainsi que la référence de la procédure en cours alors déchiffrés sont conformes aux informations attendues par l'application iaciH, alors l'application iaciH considère identifié l'équipement En. A partir d'une autre table de correspondance, le dispositif iaciH déduit à partir de l'identité IE de l'équipement En un ensemble de couples (clé de scellement CSH, logiciel de contrôle d'intégrité AVI), un couple est sélectionné au hasard parmi l'ensemble des couples disponibles. L'application iaciH choisit au hasard au sein d'une table de correspondance un couple de clés de chiffrement (KTA, KTA') parmi un ensemble de couples disponibles. L'application iaciH chiffre la clé KTA par la clé KB(KB(KTA)), la clé KTA' chiffrée par la clé KC, l'ensemble chiffré par la clé KB(KB(KC(KTA'))) et le logiciel AVI chiffré par la clé KC(KC(AVI)). L'application iaciH transmet à l'application iaciC un message contenant la référence de la procédure en cours, le type de message "réponse positive consultation d'identité", un intitulé en clair de l'équipement En, le produit KB(KTA), le produit KB(KC(KTA')), le produit KC(AVI) et le condensé CORP produit à partir du chiffrement par la clé KB des précédents composants de ce message. Si l'une quelconque des opérations précédentes à cette étape a échoué, alors le dispositif transmet au lieu du précédent message un message contenant la référence de la procédure en cours et le type de message "réponse négative consultation d'identité" et le condensé CORP produit à partir du chiffrement par la clé KB des précédents composants de ce message. On notera que l'identification et l'authentification de l'application iaciZSₙ est opérée lors du déchiffrement de IC et de la recherche de son identité dans la table de correspondance. Le contrôle d'intégrité fonctionne sur le principe que le dispositif d'homologation H connaît seul le résultat de l'exécution d'un logiciel AVI sur l'équipement Eₙ. Le résultat attendu est une clé de scellement CSH et le résultat produit du logiciel AVI sera une autre clé de scellement CSZS qui, si l'équipement Eₙ est intègre, doit être identique à CSH. Pour éviter la prédiction du résultat de CSZS, le dispositif H sélectionne au hasard un logiciel AVI parmi plusieurs disponibles et, de cette manière, le résultat n'est pas prévisible par l'équipement En. Le dispositif H alloue un couple de clés temporaires (KTA', KTA) afin de permettre l'échange entre le dispositif de sécurité C et la zone ZS de clés de chiffrement temporaires nécessaires à la sécurité des échanges entre le terminal T et l'équipement En lors du fonctionnement du terminal éclaté. La clé KTA est chiffrée par la clé KB car la clé KTA sera utilisée par l'application iaciC. La clé KTA' est chiffrée par la clé KC puis par la clé KB, de cette manière la clé KTA' sera transmise à l'application iaciZS uniquement si l'application iaciC a préalablement donné son accord en déchiffrant le produit KB(KC(KTA')). Le logiciel AVI est chiffré par la clé KC pour que seule l'application iaciZS puisse déchiffrer le logiciel AVI et ainsi empêcher d'éventuelles malversations de l'application iaciC sur le code du logiciel AVI.

Si le message est de type "réponse positive consultation d'identité", l'application iaciC déchiffre à partir de sa clé KD et en déduit la validité du message en déchiffrant CORP, et, à partir de sa clé KB', en déduit la clé KTA et le produit KC(KTA'). Le dispositif iaciC envoie, via l'interface C et la DOM API « C », à l'interface utilisateur UI un message contenant la référence de la procédure en cours, le type du message "identification acceptée" et un intitulé en clair de l'équipement En. Si le message est de type "réponse négative consultation d'identité", l'application iaciC déchiffre à partir de sa clé KD et en déduit la validité du message en déchiffrant CORP. Si le message est de type "réponse négative consultation d'identité" ou si l'une quelconque des opérations précédentes à cette étape a échoué, alors l'application iaciC stoppe la procédure d'activation et envoie, via l'interface C et la DOM API « C », à l'interface utilisateur UI un message contenant la référence de la procédure en cours et le type du message "identification défectueuse". L'échange entre l'interface C et la DOM API « C », est réalisé, par exemple, par la solution SIMAccess.

Après avoir reçu le message "identification défectueuse", l'interface utilisateur UI peut alors afficher un message pour indiquer à l'utilisateur la cause de l'échec de la procédure d'activation.

Après avoir reçu le message "identification acceptée", l'interface utilisateur UI peut alors afficher un message indiquant l'intitulé de l'équipement En et une question sur la poursuite de la procédure d'activation. Le message peut être formaté, par exemple, sous la forme d'une page web si l'interface utilisateur UI est un browser web. L'utilisateur choisit de poursuivre ou non la procédure en sélectionnant la réponse parmi les choix proposés. Si la réponse est positive, l'interface utilisateur Ul transmet à l'application iaciC un message contenant la référence de la procédure et le type du message "acceptation procédure". Si la réponse est négative, l'interface utilisateur UI transmet à l'application iaciC un message contenant la référence de la procédure et le type du message "rejet de la procédure".

Si le message est de type "acceptation procédure", l'application iaciC choisit un couple de clés (KTB, KTB') parmi l'ensemble des couples disponibles contenu dans une table de correspondance, chiffre la clé KTB à partir de la clé KTA (KTA(KTB)) et transmet à l'application iaciZSₙ de la zone de sécurité ZSₙ un message contenant la référence de la procédure, le type du message "demande authentification", le produit KC(KTA'), le produit KTA(KTB), le produit KC(AVI) et le condensé CODA produit à partir du chiffrement par la clé KTA des précédents composants de ce message. Si le message est de type "rejet procédure" ou si l'une quelconque des opérations précédentes à cette étape a échoué, l'application iaciC stoppe la procédure d'activation et envoie à l'interface utilisateur UI un message contenant la référence de la procédure et le type du message "arrêt procédure". On notera que l'application iaciC alloue un couple de clés temporaires (KTB', KTB) pour permettre le chiffrement des échanges dans le sens de l'application iaciZSₙ vers l'application iaciC. L'application iaciC chiffre la clé KTB par la clé KTA pour garantir que seul l'application iaciZSₙ, connaissant KTA', soit apte à déchiffrer le produit KTA(KTB) et ainsi d'extraire la clé KTB.

Après avoir reçu le message "arrêt procédure", l'interface utilisateur UI peut alors afficher un message pour indiquer à l'utilisateur la cause de l'échec de la procédure d'activation.

Après avoir reçu le message "demande authentification", l'application iaciZSₙ déchiffre à partir de sa clé KC' et en déduit le logiciel AVI et la clé de chiffrement KTA', et à partir de la clé KTA', en déduit la clé KTB et la validité du message en déchiffrant le condensé CODA. L'application iaciZSₙ exécute le logiciel AVI. Le logiciel AVI est conçu pour ne pouvoir s'exécuter que sur un équipement En du type précédemment identifié par le dispositif d'homologation H (le logiciel AVI est dit "signé") et est conçu pour produire une valeur appelée "clé de scellement CSZSₙ", appelée aussi clé de hachage ou hachage, à partir d'un ensemble de données collectées au cours de l'exécution du logiciel AVI dans l'équipement En. Les informations collectées peuvent être, par exemple, un nom d'un fichier, la date et l'heure de l'horloge interne de l'équipement Eₙ, l'espace mémoire utilisé, etc. A l'issue de l'exécution du logiciel AVI, l'application iaciZSₙ choisit un couple de clés (KTC, KTC') au hasard parmi l'ensemble des couples disponibles contenu dans une table de correspondance. L'application iaciZSₙ chiffre la clé de scellement CSZSₙ chiffrée par la clé KA, l'ensemble chiffré par la clé KTB (KTB(KA(CSZSₙ))) et chiffre la clé KTC à partir de la clé KTB (KTB(KTC)). Il envoie à l'application iaciC un message contenant la référence de la procédure, le type du message "réponse authentification", le produit KTB(KA(CSZSₙ)), le produit KTB(KTC) et le condensé CORA produit à partir du chiffrement par la clé KTB des précédents composants de ce message. Si l'une quelconque des opérations précédentes à cette étape a échoué, alors l'application iaciZSₙ envoie à l'application iaciC un message contenant la référence de la procédure, le type du message "anomalie authentification" et le condensé CORA produit à partir du chiffrement par la clé KTB des précédents composants de ce message. On notera que le dispositif iaciZSₙ alloue un couple de clés temporaires (KTC', KTC) pour permettre le chiffrement des échanges dans le sens application iaciC vers l'application iaciZSₙ. L'application iaciZSₙ chiffre la clé KTC par la clé KTB en vue de transférer de manière sécurisée la clé KTC vers l'application iaciC. La clé de scellement CSZSₙ est chiffré par la clé KA puis par la clé KTB, la clé KTB garantissant que l'application iaciC aura validé le produit KTB(KA(CSZSₙ)) en le déchiffrant et la clé KA garantissant que la clé CSZSₙ est envoyé par le dispositif iaciZSₙ et sera déchiffrable uniquement par l'application iaciH, sans possibilité de malversations de la part de l'application iaciC.

Si le message est de type "réponse authentification", l'application iaciC déchiffre à partir de sa clé KTB' et en déduit le produit KA(CSZSₙ), la clé KTC et la validité du message en déchiffrant le condensé CORA. L'application iaciC chiffre le produit KA(CSZSₙ) chiffré par la clé KD (KD(KA(CSZSₙ))). Il transmet à l'application iaciH un message contenant la référence de la procédure, le type de message "validation authentification", le produit KD(KA(CSZSₙ)) et le condensé CORC produit par le chiffrement par KD des précédents composants de ce message. Si le message est de type "anomalie authentification", l'application iaciC déchiffre à partir de sa clé KTB' et en déduit la validité du message en déchiffrant le condensé CORA. Si le message est de type "anomalie authentification" ou si l'une quelconque des opérations précédentes à cette étape a échoué, alors l'application iaciC stoppe la procédure d'activation et envoie à l'interface utilisateur UI un message contenant la référence de la procédure et le type du message "authentification défectueuse". On notera que l'application iaciC chiffre le produit KA(CSZSₙ) par la clé KD en guise de validation de bon transit par l'application iaciC.

Après avoir reçu le message "authentification défectueuse", l'interface utilisateur UI peut alors afficher un message pour indiquer à l'utilisateur la cause de l'échec de la procédure.

Après avoir reçu le message "validation authentification", l'application iaciH déchiffre à partir de sa clé KD' et en déduit la validité du message en déchiffrant le condensé CORC et le produit KA(CSZSₙ), puis déchiffre à partir de sa clé KA' et en déduit la clé de scellement CSZSₙ. L'application iaciH compare la clé de scellement CSZSₙ avec la clé de scellement CSH obtenue précédemment par la table de correspondance (identifiant d'équipement En, (clé de scellement CSH, logiciel AVI)). Si les 2 clés de scellement CSH et CSZSₙ sont identiques, alors l'équipement En est considéré comme authentifié (car la l'équipement En possède avec certitude la clé KC') et intègre (car les 2 clés de scellement correspondent), et, dans le cas contraire, il est considéré comme corrompu. L'application iaciH envoie à l'application iaciC un message contenant la référence de la procédure, le type de message et un condensé COVC produit par le chiffrement par KB des précédents composants de ce message. Le type de message est soit "vérification positive contrôle d'intégrité", soit "vérification négative contrôle d'intégrité" si l'une quelconque des opérations précédentes à cette étape a échoué.

Après avoir reçu le message, l'application iaciC déchiffre à partir de sa clé KB' et en déduit la validité du message en déchiffrant le condensé COVC. Si le message est de type "vérification positive contrôle d'intégrité", l'application iaciC envoie, via l'interface « C » et la DOM API « C », à l'application PA₀ une demande d'activation du terminal éclaté sous la forme d'un message contenant la référence de la procédure, le type de message "activation terminal éclaté" et les clés KTC et KTB'. Si le message est de type "vérification négative contrôle d'intégrité" ou si l'une quelconque des opérations précédentes à cette étape a échoué, alors l'application iaciC stoppe la procédure d'activation et envoie à l'interface utilisateur UI un message contenant la référence de la procédure, un type de message "équipement corrompu" et l'identité de l'équipement Eₙ.

Après avoir reçu le message "équipement corrompu", l'interface UI peut alors afficher un message pour indiquer à l'utilisateur la cause de l'échec de la procédure.

Après avoir reçu le message "activation terminal éclaté", l'application PA₀ est apte à communiquer de manière sécurisée avec l'équipement En, les clés KTC et KTB' étant employées pour sécuriser respectivement les communications descendantes et montantes entre l'application PA₀ et la zone de sécurité ZSₙ (correspondant au dispositif de sécurité de l'équipement communicant).

A cette étape, le terminal éclaté composé du terminal T et de l'équipement En est opérationnel, et le terminal éclaté est considéré comme activé.

## Revendications

1. Procédé de création d'un terminal éclaté T+ΣEₙ pour l'accès à un service, ledit terminal éclaté étant constitué d'un terminal T de base et d'une pluralité d'équipements Eₙ connectés en série audit terminal T de base, le terminal de base (20) et lesdits équipements (30, 40) disposant respectivement de dispositifs (22, 36, 46) de gestion PA₀, PAₙ pour l'exécution d'une procédure UES de terminal éclaté, **caractérisé en ce que** ledit procédé comprend :
- une étape d'initialisation consistant à transmettre au terminal T de base (20), par ledit service, des paramètres d'accès auxdits équipements Eₙ (30, 40),
- une pluralité d'étapes itératives successives de création d'un terminal éclaté (T+ΣEₙ₋₁)+Eₙ par raccordement de l'équipement Eₙ au terminal éclaté T+ΣEₙ₋₁ créé à l'étape précédente, chaque étape comprenant les opérations consistant à :
- transmettre par le terminal T de base (20) à l'équipement Eₙ₋₁ les paramètres d'accès à l'équipement Eₙ,
- établir une communication entre les dispositifs de gestion PAₙ₋₁ et PAₙ pour l'exécution de la procédure de terminal éclaté des équipements Eₙ₋₁ et Eₙ,
- créer le terminal éclaté (T+ΣEₙ₋₁)+Eₙ par exécution de la procédure UES de terminal éclaté entre les dispositifs de gestion PA₀ et PAₙ via le dispositif de gestion PAₙ₋₁.

2. Procédé selon la revendication 1, **caractérisé en ce que** lesdits paramètres d'accès à l'équipement Eₙ comprennent un identifiant de l'équipement Eₙ₋₁ d'une interface CA(Eₙ) d'accès audit équipement Eₙ par un réseau PNₙ de proximité reliant les équipements Eₙ₋₁ et Eₙ.

3. Procédé selon la revendication 1, **caractérisé en ce que** lesdits paramètres d'accès à l'équipement Eₙ comprennent une adresse ad(Eₙ) de l'équipement Eₙ dans le réseau de proximité PNₙ et un identifiant de l'équipement Eₙ , et **en ce que** l'interface sur l'équipement Eₙ₋₁ d'accès audit équipement Eₙ dans un réseau PNₙ de proximité reliant les équipements Eₙ₋₁ et Eₙ est déterminée en exécutant la procédure UES de terminal éclaté par le dispositif de gestion PAₙ₋₁ successivement sur toutes les interfaces de l'équipement Eₙ₋₁ dans ledit réseau PNₙ de proximité, jusqu'à ce que la procédure UES de terminal éclaté appliquée à une desdites interfaces envoie ledit identifiant id(Eₙ) de l'équipement Eₙ.

4. Procédé selon l'une quelconque des revendications 1 à 3, **caractérisé en ce que**, à l'issue de la création du terminal éclaté (T+ΣEₙ₋₁)+Eₙ, le dispositif de gestion PAₙ₋₁ établit un tunnel T(n-1)-n de communication permanente avec le dispositif de gestion PAₙ, et **en ce que** le dispositif (22) de gestion PA₀ établit un tunnel T0-n de communication permanente avec le dispositif de gestion PAₙ, encapsulé dans les tunnels T0-(n-1) et T(n-1)-n.

5. Système pour la création d'un terminal éclaté T+ΣEₙ pour l'accès à un service, ledit système comprenant :
- un terminal T de base (20), équipé d'un dispositif (22) de gestion PA₀ pour l'exécution d'une procédure UES de terminal éclaté, ledit dispositif (22) de gestion PA₀ est apte à :
- exécuter une pluralité d'étapes successives de création d'un terminal éclaté (T+ ΣEₙ₋₁)+Eₙ, par raccordement de l'équipement Eₙ au terminal éclaté T+ΣEₙ₋₁ créé à l'étape précédente , et
- à transmettre à l'équipement Eₙ₋₁ les paramètres d'accès à l'équipement Eₙ lors de l'étape de création du terminal éclaté (T+ ΣEₙ₋₁)+Eₙ,
- une pluralité d'équipements Eₙ connectés en série audit terminal T de base, lesdits équipements (30, 40) étant respectivement chacun équipé d'au moins un dispositif de gestion PAₙ pour l'exécution de ladite procédure UES de terminal éclaté, ledit dispositif de gestion PAₙ étant apte à établir une communication entre les dispositifs de gestion PAₙ₋₁ et PAₙ pour l'exécution de la procédure de terminal éclaté des équipements Eₙ₋₁ et Eₙ.

6. Terminal (20) pour la mise en oeuvre du procédé selon les revendications 1 à 4 et apte à être mis en oeuvre dans un système conforme à la revendication 5, **caractérisé en ce qu'**il comprend :
- au moins un premier dispositif (25) de sécurité recevant l'identité d'au moins un équipement E communicant (30, 40), au moins une interface utilisateur (23) accédant aux ressources dudit terminal (20),
- un dispositif (22) de gestion PA₀ pour gérer ledit terminal éclaté apte à - exécuter une pluralité d'étapes successives de création d'un terminal éclaté (T+ ΣEₙ₋₁)+Eₙ, par raccordement de l'équipement Eₙ au terminal éclaté T+ΣEₙ₋₁ créé à l'étape précédente et
- au moins des moyens d'émission et de réception de données, lesdits moyens étant aptes à transmettre à l'équipement Eₙ₋₁ les paramètres d'accès à l'équipement Eₙ.

7. Equipement E communicant (30, 40) pour la mise en oeuvre du procédé selon les revendications 1 à 4 et apte être mis en oeuvre dans un système conforme à la revendication 5, **caractérisé en ce qu'**il comprend :
- au moins un deuxième dispositif (32, 42) de sécurité pour réaliser l'identification, l'authentification et le contrôle d'intégrité dudit équipement communicant (30, 40),
- un dispositif de gestion PAₙ pour l'exécution de ladite procédure UES de terminal éclaté, ledit dispositif de gestion PAₙ étant apte établir une communication entre les dispositifs de gestion PAₙ₋₁ et PAₙ pour l'exécution de la procédure de terminal éclaté des équipements Eₙ₋₁ et Eₙ, et
- au moins des moyens d'émission et de réception de données, lesdits moyens étant aptes à établir une communication entre les dispositifs de gestion PAₙ₋₁ et PAₙ pour l'exécution de la procédure de terminal éclaté des équipements Eₙ₋₁ et Eₙ.

## Claims

1. Method of creating a split terminal T+ΣEₙ for accessing a service, said split terminal being made up of a base terminal T and a plurality of equipments Eₙ connected in series to said base terminal T, the base terminal (20) and said equipments (30, 40) respectively having management devices PA₀, PAₙ (22, 36, 46) for executing a split terminal procedure UES, **characterized in that** said method comprises:
- an initialization step consisting in transmitting to the base terminal T (20), by said service, the parameters for accessing said equipments Eₙ (30, 40),
- a plurality of successive iterative steps for creating a split terminal (T+ΣEₙ₋₁)+Eₙ by connecting the equipment Eₙ to the split terminal T+ΣEₙ₋₁ created in the preceding step, each step comprising operations consisting in:
- transmitting, by the base terminal T (20) to the equipment Eₙ₋₁, the parameters for accessing the equipment Eₙ,
- setting up a communication between the management devices PAₙ₋₁ and PAₙ for executing the split terminal procedure for the equipments Eₙ₋₁ and Eₙ,
- creating the split terminal (T+ΣEₙ₋₁)+Eₙ by executing the split terminal procedure UES between the management devices PA₀ and PAₙ via the management device PAₙ₋₁.

2. Method according to Claim 1, **characterized in that** said parameters for accessing the equipment Eₙ comprise an identifier of the equipment Eₙ₋₁ of an interface CA(Eₙ) for accessing said equipment Eₙ via a proximity network PNₙ linking the equipments Eₙ₋₁ and Eₙ.

3. Method according to Claim 1, **characterized in that** said parameters for accessing the equipment Eₙ comprise an address ad(Eₙ) of the equipment Eₙ in the proximity network PNₙ and an identifier of the equipment Eₙ, and **in that** the interface on the equipment Eₙ₋₁ for accessing said equipment Eₙ in a proximity network PNₙ linking the equipments Eₙ₋₁ and Eₙ is determined by executing the split terminal procedure UES by the management device PAₙ₋₁ successively on all the interfaces of the equipment Eₙ₋₁ in said proximity network PNₙ, until the split terminal procedure UES applied to one of said interfaces sends said identifier id(Eₙ) of the equipment Eₙ.

4. Method according to any one of Claims 1 to 3, **characterized in that**, after the creation of the split terminal (T+ΣEₙ₋₁)+Eₙ, the management device PAₙ₋₁ sets up a tunnel T(n-1)-n for permanent communication with the management device PAₙ, and **in that** the management device PA₀ (22) sets up a tunnel T0-n for permanent communication with the management device PAₙ, encapsulated in the tunnels T0-(n-1) and T(n-1)-n.

5. System for creating a split terminal T+ΣEₙ for accessing a service, said system comprising:
- a base terminal T (20), equipped with a management device PA₀ for executing a split terminal procedure UES (22), said management device PA₀ is able to:
- execute a plurality of successive steps for creating a split terminal (T+ΣEₙ₋₁)+Eₙ by connecting the equipment Eₙ to the split terminal T+ΣEₙ₋₁ created in the preceding step, and
- transmit to the equipment Eₙ₋₁ the parameters for accessing the equipment Eₙ during the step for creation of the split terminal (T+ΣEₙ₋₁)+Eₙ,
- a plurality of equipments Eₙ connected in series to said base terminal T, said equipments (30, 40) being each respectively equipped with at least one management device PAₙ for executing said split terminal procedure UES, said management device PAₙ being able to set up a communication between the management devices PAₙ₋₁ and PAₙ to execute the split terminal procedure for the equipments Eₙ₋₁ and Eₙ.

6. Terminal (20) for implementing the method according to Claims 1 to 4 and suitable for implementation in a system according to Claim 5, **characterized in that** it comprises:
- at least one first security device (25) receiving the identity of at least one communicating equipment E (30, 40), at least one user interface (23) accessing the resources of said terminal (20),
- a management device PA₀ (22) for managing said split terminal able to execute a plurality of successive steps for creating a split terminal (T+ΣEₙ₋₁)+Eₙ, by connecting the equipment Eₙ to the split terminal T+ΣEₙ₋₁ created in the preceding step, and
- at least data transmission and reception means, said means being able to transmit to the equipment Eₙ₋₁ the parameters for accessing the equipment Eₙ.

7. Communicating equipment E (30, 40) for implementing the method according to Claims 1 to 4 and suitable for implementation in a system according to Claim 5, **characterized in that** it comprises:
- at least one second security device (32, 42) for handling the identification, authentication and integrity checking of said communicating equipment (30, 40),
- a management device PAₙ for executing said split terminal procedure UES, said management device PAₙ being able to set up a communication between the management devices PAₙ₋₁ and PAₙ to execute the split terminal procedure for the equipments Eₙ₋₁ and Eₙ, and
- at least data transmission and reception means, said means being able to set up a communication between the management devices PAₙ₋₁ and PAₙ to execute the split terminal procedure for the equipments Eₙ₋₁ and Eₙ.

## Patentansprüche

1. Verfahren zur Erzeugung eines gesplitteten Endgeräts T+ΣEₙ für den Zugriff auf einen Dienst, wobei das gesplittete Endgerät aus einem Basisendgerät T und mehreren Geräten Eₙ besteht, die in Reihe mit dem Basisendgerät T verbunden sind, wobei das Basisendgerät (20) und die Geräte (30, 40) je über Verwaltungsvorrichtungen (22, 36, 46) PA₀, PAₙ zur Ausführung einer gesplittetes-Endgerät-Prozedur UES verfügen, **dadurch gekennzeichnet, dass** das Verfahren enthält:
- einen Initialisierungsschritt, der darin besteht, durch den Dienst Zugriffsparameter auf die Geräte Eₙ (30, 40) an das Basisendgerät T (20) zu übertragen,
- mehrere aufeinanderfolgende iterative Schritte der Erzeugung eines gesplitteten Endgeräts (T+ΣEₙ₋₁)+Eₙ durch Anschluss des Geräts Eₙ an das im vorhergehenden Schritt erzeugte gesplittete Endgerät T+ΣEₙ₋₁, wobei jeder Schritt die Vorgänge enthält, die darin bestehen:
- durch das Basisendgerät T (20) an das Gerät Eₙ₋₁ die Zugriffsparameter auf das Gerät Eₙ zu übertragen,
- eine Kommunikation zwischen den Verwaltungsvorrichtungen PAₙ₋₁ und PAₙ für die Ausführung der gesplittetes-Endgerät-Prozedur der Geräte Eₙ₋₁ und Eₙ aufzubauen,
- das gesplittete Endgerät (T+ΣEₙ₋₁)+Eₙ durch Ausführung der gesplittetes-Endgerät-Prozedur UES zwischen den Verwaltungsvorrichtungen PA₀ und PAₙ über die Verwaltungsvorrichtung PAₙ₋₁ zu erzeugen.

2. Verfahren nach Anspruch 1, **dadurch gekennzeichnet, dass** die Zugriffsparameter auf das Gerät Eₙ eine Kennung des Geräts Eₙ₋₁ einer Zugriffsschnittstelle CA(Eₙ) auf das Gerät Eₙ durch ein Nahbereichsnetzwerk PNₙ enthalten, das die Geräte Eₙ₋₁ und Eₙ verbindet.

3. Verfahren nach Anspruch 1, **dadurch gekennzeichnet, dass** die Zugriffsparameter auf das Gerät Eₙ eine Adresse ad(Eₙ) des Geräts Eₙ im Nahbereichsnetzwerk PNₙ und eine Kennung des Geräts Eₙ enthalten, und das die Schnittstelle auf dem Gerät Eₙ₋₁ für den Zugriff auf das Gerät Eₙ in einem Nahbereichsnetzwerk PNₙ, das die Geräte Eₙ₋₁ und Eₙ verbindet, bestimmt wird durch die Ausführung der gesplittetes-Endgerät-Prozedur UES durch die Verwaltungsvorrichtung PAₙ₋₁ nacheinander an allen Schnittstellen des Geräts Eₙ₋₁ im Nahbereichsnetzwerk PNₙ, bis die an eine der Schnittstellen angewendete gesplittetes-Endgerät-Prozedur UES die Kennung id(Eₙ) des Geräts Eₙ sendet.

4. Verfahren nach einem der Ansprüche 1 bis 3, **dadurch gekennzeichnet, dass** nach der Erzeugung des gesplitteten Endgeräts (T+ΣEₙ₋₁)+Eₙ die Verwaltungsvorrichtung PAₙ₋₁ einen permanenten Kommunikationstunnel T(n-1)-n mit der Verwaltungsvorrichtung PAₙ aufbaut, und dass die Verwaltungsvorrichtung PA₀ (22) einen permanenten Kommunikationstunnel T0-n mit der Verwaltungsvorrichtung PAₙ aufbaut, der in die Tunnel T0-(n-1) und T(n-1)-n eingekapselt ist.

5. System zur Erzeugung eines gesplitteten Endgeräts T+ΣEₙ für den Zugriff auf einen Dienst, wobei das System enthält:
- ein Basisendgerät T (20), das mit einer Verwaltungsvorrichtung PA₀ (22) für die Ausführung einer gesplittetes-Endgerät-Prozedur UES ausgestattet ist, wobei die Verwaltungsvorrichtung PA₀ (22) fähig ist:
- mehrere aufeinanderfolgende Schritte der Erzeugung eines gesplitteten Endgeräts (T+ΣEₙ₋₁)+Eₙ, durch Anschluss des Geräts Eₙ an das im vorhergehenden Schritt erzeugte gesplittete Endgerät T+ΣEₙ₋₁ auszuführen, und
- an das Gerät Eₙ₋₁ die Zugriffsparameter auf das Gerät Eₙ im Schritt der Erzeugung des gesplitteten Endgeräts (T+ΣEₙ₋₁)+Eₙ zu übertragen,
- mehrere Geräte Eₙ, die in Reihe mit dem Basisendgerät T verbunden sind, wobei die Geräte (30, 40) je mit mindestens einer Verwaltungsvorrichtung PAₙ zur Ausführung der gesplittetes-Endgerät-Prozedur UES ausgestattet sind, wobei die Verwaltungsvorrichtung PAₙ fähig ist, eine Kommunikation zwischen den Verwaltungsvorrichtungen PAₙ₋₁ und PAₙ für die Ausführung der gesplittetes-Endgerät-Prozedur der Geräte Eₙ₋₁ und Eₙ aufzubauen.

6. Endgerät (20) zur Durchführung des Verfahrens nach den Ansprüchen 1 bis 4 und fähig, in einem System gemäß Anspruch 5 angewendet zu werden, **dadurch gekennzeichnet, dass** es enthält:
- mindestens eine erste Sicherheitsvorrichtung (25), die die Identität mindestens eines kommunizierenden Geräts E (30, 40) empfängt, wobei mindestens eine Benutzerschnittstelle (23) auf die Ressourcen des Endgeräts (20) zugreift,
- eine Verwaltungsvorrichtung (22) PA₀ zur Verwaltung des gesplitteten Endgeräts, die fähig ist, mehrere aufeinanderfolgende Schritte der Erzeugung eines gesplitteten Endgeräts (T+ΣEₙ₋₁)+Eₙ durch Anschluss des Geräts Eₙ an das im vorhergehenden Schritt erzeugte gesplittete Endgerät T+ΣEₙ₋₁ auszuführen, und
- mindestens Daten-Sende- und Empfangseinrichtungen, wobei die Einrichtungen fähig sind, an das Gerät Eₙ₋₁ die Zugriffsparameter auf das Gerät Eₙ zu übertragen.

7. Kommunizierendes Gerät E (30, 40) zur Anwendung des Verfahrens nach den Ansprüchen 1 bis 4 und fähig, in einem System nach Anspruch 5 angewendet zu werden, **dadurch gekennzeichnet, dass** es enthält:
- mindestens eine zweite Sicherheitsvorrichtung (32, 42), um die Identifizierung, die Authentifizierung und die Integritätskontrolle des kommunizierenden Geräts (30, 40) durchzuführen,
- eine Verwaltungsvorrichtung PAₙ zur Ausführung der gesplittetes-Endgerät-Prozedur UES, wobei die Verwaltungsvorrichtung PAₙ fähig ist, eine Kommunikation zwischen den Verwaltungsvorrichtungen PAₙ₋₁ und PAₙ für die Ausführung der gesplittetes-Endgerät-Prozedur der Geräte Eₙ₋₁ und Eₙ aufzubauen, und
- mindestens Daten-Sende- und Empfangseinrichtungen, wobei die Einrichtungen fähig sind, eine Kommunikation zwischen den Verwaltungsvorrichtungen PAₙ₋₁ und PAₙ zur Ausführung der gesplittetes-Endgerät-Prozedur der Geräte Eₙ₋₁ und Eₙ aufzubauen.
